# EUROPÄISCHE PATENTSCHRIFT

(11) **EP 4 060 638 B1**
(45) Veröffentlichungstag und Bekanntmachung des Hinweises auf die Patenterteilung: **14.08.2024**
(21) Anmeldenummer: 22158725.6
(22) Anmeldetag: 25.02.2022
(51) Int. Cl.: G08C 17/02, H04Q 9/00

(54) **SYSTEM MIT EINEM FELDGERÄT UND EINEM STEUERGERÄT UND VERFAHREN ZUM BETREIBEN EINES SOLCHEN SYSTEMS**
SYSTEM WITH A FIELD DEVICE AND A CONTROL DEVICE AND METHOD FOR OPERATING SUCH A SYSTEM
SYSTÈME DOTÉ D'UN APPAREIL DE TERRAIN ET D'UN DISPOSITIF DE COMMANDE ET PROCÉDÉ DE FONCTIONNEMENT D'UN TEL SYSTÈME

(30) Priorität: 19.03.2021 DE 102021106820
(43) Veröffentlichungstag der Anmeldung: 21.09.2022
(73) Patentinhaber: Krohne S.A.S., 26103 Romans-sur-Isere Cedex (FR)
(72) Erfinder: Dubray, Olivier, 26100 Romans sur Isère (FR); Lambert, Denis, 26260 Saint Bardoux (FR); Marcel, Fabrice, 07130 Saint Péray (FR); Metral, Pierre, 26600 Chanos-Curson (FR); Chanal, Florian, 26240 Saint Barthelemy de Vals (FR); Pichot, Vincent, 26100 Romans sur Isère (FR)
(74) Vertreter: Gesthuysen Patentanwälte

(56) Entgegenhaltungen:
- EP-A1- 2 981 102
- WO-A2-2006/090371
- DE-A1- 102018 202 176
- US-A1- 2019 197 807

## Beschreibung

Die Erfindung betrifft zum einen ein System mit einem Feldgerät und einem Steuergerät und zum anderen ein Verfahren zum Betreiben eines solchen Systems.

In dem System weist das Feldgerät eine Feldgerät-Steuerungsvorrichtung und eine Feldgerät-Übertragungsvorrichtung und das Steuergerät eine Steuergerät-Steuerungsvorrichtung und eine Steuergerät-Übertragungsvorrichtung auf. Das Feldgerät und das Steuergerät sind voneinander separate Geräte.

Die Feldgerät-Übertragungsvorrichtung und die Steuergerät-Übertragungsvorrichtung weisen eine Übertragungsstrecke zwischeneinander auf. Weiter sind die Feldgerät-Steuerungsvorrichtung und die Steuergerät-Steuerungsvorrichtung zu einer bidirektionalen Übertragung von Nachrichten zwischeneinander gemäß einem Kommunikationsprotokoll über die Feldgerät-Übertragungsvorrichtung, die Übertragungsstrecke und die Steuergerät-Übertragungsvorrichtung ausgebildet. Vorzugsweise ist das Kommunikationsprotokoll ein Busprotokoll. Im Betrieb des Systems wird demnach entweder eine Nachricht von der Feldgerät-Steuerungsvorrichtung erzeugt und dann gemäß dem Kommunikationsprotokoll zur Steuergerät-Steuerungsvorrichtung übertragen oder eine Nachricht wird von der Steuergerät-Steuerungsvorrichtung erzeugt und gemäß dem Kommunikationsprotokoll zur Feldgerät-Steuerungsvorrichtung übertragen. Eine Nachricht weist eine beliebige Information auf.

Das Kommunikationsprotokoll setzt die Übertragung von Nachrichten mit einer Master-Rolle und einer Slave-Rolle um. Das bedeutet, das Kommunikationsprotokoll definiert eine Master-Rolle und eine Slave-Rolle. Wenn eine erste Vorrichtung und eine zweite Vorrichtung das Kommunikationsprotokoll umsetzen und die erste Vorrichtung die Master-Rolle und die zweite Vorrichtung die Slave-Rolle umsetzt, dann kann vorzugsweise nur die erste Vorrichtung unaufgefordert eine Nachricht an die zweite Vorrichtung übertragen, wohingegen die zweite Vorrichtung vorzugsweise nur dann eine Nachricht an die erste Vorrichtung übertragen kann, wenn sie dazu von der ersten Vorrichtung mit einem entsprechenden Inhalt einer Nachricht aufgefordert worden ist. Demnach kann die zweite Vorrichtung unaufgefordert keine Nachricht übertragen.

Aus dem Stand der Technik sind Systeme der beschriebenen Art bekannt, bei welchen die Steuergerät-Steuerungsvorrichtung die Master-Rolle und die Feldgerät-Steuerungsvorrichtung die Slave-Rolle umsetzt. Demnach kann nur die Steuergerät-Steuerungsvorrichtung unaufgefordert eine Nachricht zur Feldgerät-Steuerungsvorrichtung übertragen, wohingegen die Feldgerät-Steuerungsvorrichtung unaufgefordert keine Nachricht an die Steuergerät-Steuerungsvorrichtung übertragen kann. Damit gehen verschiedene Probleme einher:
Ein Problem ist, dass das Feldgerät eine vom Steuergerät auf das Feldgerät übertragene Nachricht innerhalb eines im Kommunikationsprotokoll definierten Zeitrahmens abarbeiten muss. Oftmals ist dieser Zeitrahmen derart gering, dass die dem Feldgerät zur Verfügung stehenden Ressourcen zu diesem Zeitpunkt nicht ausreichend sind, die Nachricht innerhalb des Zeitrahmens abzuarbeiten. Denn die Ressourcen des Feldgeräts werden nicht nur für die Abarbeitung der Nachricht, sondern auch für die Abarbeitung von anderen Aufgaben im Feldgerät benötigt.

Ein anderes Problem ist, dass das Steuergerät eine Anzahl an Nachrichten zum Feldgerät überträgt und die dem Feldgerät zu diesem Zeitpunkt zur Verfügung stehenden Ressourcen ausreichend sind, zwar eine oder mehrere der Nachrichten, aber nicht die gesamte Anzahl an Nachrichten innerhalb des Zeitrahmens abzuarbeiten.

Ein weiteres Problem ist, dass dem Feldgerät ein Zeitpunkt, an welchen eine Nachricht vom Steuergerät zum Feldgerät übertragen wird, nicht bekannt ist. Ein weiteres Problem ist, dass das Steuergerät unaufgefordert eine Nachricht an das Feldgerät übertragen kann. Damit einher geht ein Sicherheitsrisiko, da auch ein anderes Gerät eine Nachricht an das Feldgerät übertragen kann.

US 2019/197807 A1 offenbart ein Zugangskontrollsystem, das eine Türentriegelungsfunktion implementiert. Das Verfahren umfasst den Schritt des Umschaltens eines ersten Bluetooth-Moduls von einer Slave-Rolle zu einer Master-Rolle.

EP 2 981 102 A1 offenbart drahtlose Kommunikation zwischen drahtlosen Kommunikationsgeräten. Es kann eine unidirektionale Kommunikation vom ersten BLE-Gerät zum zweiten BLE-Gerät hergestellt werden, insbesondere in einem "nonconnectable undirected advertising mode".

Eine Aufgabe der vorliegenden Erfindung ist ein Überwinden oder zumindest Abmildern zumindest von einem der oben dargestellten Probleme im Stand der Technik.

Die Aufgabe wird durch ein System gemäß Anspruch 1 gelöst. Erfindungsgemäß setzt die Feldgerät-Steuerungsvorrichtung die Master-Rolle und die Steuergerät-Steuerungsvorrichtung die Slave-Rolle um.

Durch diese Vertauschung der Master- und der Slave-Rolle ergeben sich verschiedene Vorteile:
Das Feldgerät überträgt dann eine Nachricht oder eine Anzahl an Nachrichten an das Steuergerät, wenn die Ressourcen des Feldgeräts ausreichend sind. Die Zeitpunkte, an welchen das Feldgerät eine Nachricht an das Steuergerät überträgt, sind dem Feldgerät bekannt. Andere Geräte können unaufgefordert vorzugsweise keine Nachrichten an das Feldgerät übertragen. Somit sind die oben beschriebenen Probleme jedenfalls abgemildert.

In der Praxis kommt es vor, dass zwischen der Feldgerät-Übertragungsvorrichtung des Feldgeräts und einer Übertragungsvorrichtung eines weiteren Geräts eine weitere Übertragungsstrecke besteht und dass das weitere Gerät das Kommunikationsprotokoll im Gegensatz zum Feldgerät und Steuergerät nicht umsetzt. Dadurch kommt es vor, dass das weitere Gerät unaufgefordert Nachrichten zum Felgerät sendet. Deshalb ist das Feldgerät vorzugsweise ausgebildet, Nachrichten zu ignorieren, insbesondere Nachrichten zu ignorieren, die unaufgefordert zum Feldgerät gesendet worden sind.

In einer Ausgestaltung des Systems ist die Übertragungsstrecke eine Funkübertragungsstrecke. Vorzugsweise ist die Funkübertragungsstrecke eine Bluetooth-Funkübertragungsstrecke. Gerade bei Funkübertragungsstrecken bei den Systemen aus dem Stand der Technik besteht die Gefahr, dass ein anderes Gerät eine Nachricht an das Feldgerät überträgt. Diese Gefahr besteht bei dem erfindungsgemäßen System nicht mehr.

In einer weiteren Ausgestaltung ist das Feldgerät zur Versorgung mit elektrischer Energie über eine Stromschleife ausgebildet. Zwar ist die über eine Stromschleife übertragbare Leistung zur Versorgung des Feldgeräts mit elektrischer Energie gering, jedoch bestimmt das Feldgerät, da es die Master-Rolle umsetzt, die Zeitpunkte von Übertragungen von Nachrichten, sodass das Feldgerät eine Leistungsaufnahme über die von der Stromschleife zur Verfügung stellbare Leistung vermeidet.

In einer weiteren Ausgestaltung weist das Feldgerät eine Überwachungsvorrichtung auf. Die Überwachungsvorrichtung ist zur Bestimmung einer zur Verfügung stehenden Energie ausgebildet. Weiter ist sie zur Übermittlung der zur Verfügung stehenden Energie an die Feldgerät-Steuerungsvorrichtung ausgebildet. Die Feldgerät-Steuerungsvorrichtung ist ausgebildet, eine Übertragung von Nachrichten zur Steuergerät-Steuerungsvorrichtung nur dann durchzuführen, wenn die zur Verfügung stehende Energie größer als eine vorgegebene Minimalenergie ist. Die Minimalenergie ist zum Beispiel der Feldgerät-Steuerungsvorrichtung vorgegeben. Auf diese Weise ist sichergestellt, dass keine Unterversorgung des Feldgeräts mit elektrischer Energie bei der Übertragung einer Nachricht auftritt, welche eine Funktion des Feldgeräts beeinträchtigt.

In einer Weiterbildung der vorstehenden Ausgestaltung weist das Feldgerät einen Kondensator mit einer Kapazität auf. Die Überwachungsvorrichtung ist zur Bestimmung der zur Verfügung stehenden Energie ausgebildet, indem die Überwachungsvorrichtung zur Bestimmung einer im Kondensator gespeicherten Energie aus einer Kondensatorspannung und der Kapazität und zur Bestimmung eines Energieverbrauchs des Feldgeräts ausgebildet ist. Vorzugsweise ist die Überwachungsvorrichtung auch zur Messung einer Eingangsspannung und zur Bestimmiung einer Ladegeschwindigkeit des Kondensators aus der Eingangsspannung zur genaueren Bestimmung der zur Verfügung stehenden Energie ausgebildet. Die Kondensatorspannung fällt über den Kondensator ab.

In einer Weiterbildung der vorstehenden Ausgestaltung oder der vorstehenden Weiterbildung ist der Feldgerät-Übertragungsvorrichtung eine Übertragungsleistung zur Übertragung von Nachrichten zur Steuergerät-Übertragungsvorrichtung vorgebbar. Somit erfolgt die Übertragung einer Nachricht von der Feldgerät-Übertragungsvorrichtung über die Übertragungsstrecke zur Steuergerät-Übertragungsvorrichtung durch die Feldgerät-Übertragungsvorrichtung mit der vorgegebenen Übertragungsleistung. Weiter ist vorgesehen, dass die Feldgerät-Steuerungsvorrichtung zur Bestimmung der Übertragungsleistung ausgehend von der zuvor bestimmten zur Verfügung stehenden Energie und zur Vorgabe der Übertragungsleistung der Feldgerät-Übertragungsvorrichtung ausgebildet ist. Somit ist die Übertragungsleistung an die jeweils zur Verfügung stehende Energie angepasst.

In einer weiteren Ausgestaltung weist das Feldgerät eine Messvorrichtung auf und ist die Feldgerät-Steuerungsvorrichtung zur Durchführung einer Messung mit der Messvorrichtung ausgebildet. Vorzugsweise ist die Messvorrichtung zur Messung einer Temperatur und/oder eines Drucks und/oder eines Füllstands und/oder eines Durchflusses ausgebildet. Zum Beispiel misst das Feldgerät mit der Messvorrichtung im Betrieb des Feldgeräts eine Temperatur und/oder einen Druck und/oder einen Füllstand eines Mediums in einem Behälter. Das Feldgerät und auch das Steuergerät sind dann im Betrieb wenn das System im Betrieb ist.

In einer weiteren Ausgestaltung weist die Feldgerät-Steuerungsvorrichtung einen Arbeitsmodus und einen Übertragungsmodus auf, wobei der Arbeitsmodus und der Übertragungsmodus zeitlich voneinander getrennt sind. Das bedeutet, dass im Betrieb des Feldgeräts die Feldgerät-Steuerungsvorrichtung entweder im Arbeitsmodus oder im Übertragungsmodus ist. Weiter ist nur der Übertragungsmodus zum Übertragen von Nachrichten ausgebildet. Der Arbeitsmodus ist nicht zur Übertragung von Nachrichten ausgebildet, weshalb nur im Übertragungsmodus Nachrichten übertragen werden können. Die Feldgerät-Steuerungsvorrichtung ist ausgebildet, im Arbeitsmodus Arbeiten auszuführen, welche den Übertragungsmodus beeinträchtigen würden, zum Beispiel weil diese Arbeiten eine zu hohe elektrische Leistung benötigen und/oder zu viel Rechenzeit beanspruchen. Zu den Arbeiten zählen zum Beispiel Funktionen des Feldgeräts. Zu diesen Funktionen zählt zum Beispiel das Durchführen von Messungen mit einer Messvorrichtung. Weiter werden im Übertragungsmodus Arbeiten ausgeführt, welche diesen nicht beeinträchtigen. Zu diesen zählen ein Auslesen eines Parameters, ein Auslesen eines Status, ein Ändern eines Parameters oder eine Eingabe eines Passworts. Diese Arbeiten können aber auch im Arbeitsmodus ausgeführt werden. Weiter ist die Feldgerät-Steuerungsvorrichtung zum Wechseln zwischen dem Arbeitsmodus und dem Übertragungsmodus ausgebildet. Demnach kann die Feldgerät-Steuerungsvorrichtung im Betrieb des Feldgeräts selbstständig bestimmen, ob sie im Arbeitsmodus oder im Übertragungsmodus arbeitet. Vorzugsweise alterniert die Feldgerät-Steuerungsvorrichtung zwischen dem Arbeitsmodus und dem Übertragungsmodus im Betrieb des Systems. Somit folgt immer auf den Arbeitsmodus der Übertragungsmodus und auf den Übertragungsmodus der Arbeitsmodus.

Wenn das Feldgerät die zuvor beschriebene Messvorrichtung und die Feldgerät-Steuerungsvorrichtung den zuvor beschriebenen Arbeitsmodus und Übertragungsmodus aufweist, dann ist es vorteilhaft, wenn die Feldgerät-Steuerungsvorrichtung zur Durchführung der Messung im Arbeitsmodus und zur Übertragung von die Messung betreffenden Nachrichten im Übertragungsmodus ausgebildet ist. Die Messung betreffende Nachrichten sind insbesondere Nachrichten, die Informationen zur Konfiguration der Messvorrichtung enthalten, und Nachrichten, die von der Messvorrichtung gewonnene Informationen enthalten.

Wenn die Feldgerät-Steuerungsvorrichtung einen Arbeitsmodus und einen Übertragungsmodus aufweist, dann ist es auch vorteilhaft, wenn eine Dauer des Arbeitsmodus und/oder des Übertragungsmodus begrenzt ist. Vorzugsweise ist die Dauer auf 100 Millisekunden begrenzt.

In einer weiteren Ausgestaltung weist die Feldgerät-Steuerungsvorrichtung den zuvor beschriebenen Arbeitsmodus und Übertragungsmodus auf und sind die Feldgerät-Steuerungsvorrichtung und die Steuergerät-Steuerungsvorrichtung wie folgt ausgebildet:
- Die Feldgerät-Steuerungsvorrichtung ist zur Erzeugung einer ersten Nachricht im Übertragungsmodus ausgebildet und die erste Nachricht weist eine Aufforderung zur Übermittlung einer Aufgabe auf. Demnach wird im Betrieb des Systems die erste Nachricht von der Feldgerät-Steuerungsvorrichtung erzeugt und dann von der Feldgerät-Steuerungsvorrichtung zur Steuergerät-Steuerungsvorrichtung übertragen.
- Die Steuergerät-Steuerungsvorrichtung ist zur Erzeugung einer zweiten Nachricht mit einer Aufgabe als Erwiderung auf die erste Nachricht während des Übertragungsmodus ausgebildet. Somit wird im Betrieb des Systems die erste Nachricht von der Steuergerät-Steuerungsvorrichtung empfangen und ausgewertet und der Aufforderung zur Übermittlung einer Aufgabe entsprechend eine zweite Nachricht mit einer Aufgabe für die Feldgerät-Steuerungsvorrichtung erzeugt. Vorzugsweise weist die Aufgabe eine Durchführung einer Messung, einer Übermittlung von Daten, ein Auslesen eines Parameters, ein Auslesen eines Status, ein Ändern eines Parameters oder einer Eingabe eines Passworts auf. Die zweite Nachricht wird von der Steuergerät-Steuerungsvorrichtung zur Feldgerät-Steuerungsvorrichtung übertragen.
- Die Feldgerät-Steuerungsvorrichtung ist ausgebildet, zu bestimmen, ob eine Abarbeitung der Aufgabe im Übertragungsmodus keine Beeinträchtigung oder eine Beeinträchtigung des Übertragungsmodus bedeutet. Somit wird im Betrieb des Systems die zweite Nachricht von der Feldgerät-Steuerungsvorrichtung empfangen und von ihr bestimmt, ob eine Abarbeitung der Aufgabe im Übertragungsmodus keine Beeinträchtigung oder eine Beeinträchtigung des Betriebs des Feldgeräts bedeutet.
- Weiter ist die Feldgerät-Steuerungsvorrichtung ausgebildet, die Aufgabe nur dann im Übertragungsmodus abzuarbeiten, wenn sie keine Beeinträchtigung des Übertragungsmodus bedeutet und andernfalls im Arbeitsmodus abzuarbeiten.

Im Betrieb des Systems erfolgen die Erzeugung und die Übertragung der ersten Nachricht und der zweiten Nachricht während die Feldgerät-Steuerungsvorrichtung im Übertragungsmodus ist. Wenn die Aufgabe keine Beeinträchtigung des Übertragungsmodus bedeutet, dann wird die Aufgabe, wenn eine Dauer des aktuellen Übertragungsmodus noch ausreichend ist, im aktuellen Übetragungsmodus abgearbeitet. Wenn die Dauer nicht ausreichend ist, dann wird die Aufgabe im folgenden Arbeitsmodus und/oder in dem sich an diesen anschließenden Übertragungsmodus abgearbeitet. Wenn die Aufgabe eine Beeinträchtigung des Übertragungsmodus bedeutet, dann wird die Aufgabe im anschließenden Arbeitsmodus abgearbeitet. Das Abarbeiten einer Aufgabe kann sich somit über mehr als einen Arbeitsmodus und/oder Übertragungsmodus erstrecken und muss nicht im aktuellen Übertragungsmodus erfolgen.

In einer Weiterbildung der zuvor beschriebenen Ausgestaltung sind die Feldgerät-Steuerungsvorrichtung und die Steuergerät-Steuerungsvorrichtung zur Erzeugung und Übertragung mehrerer erster Nachrichten und/oder zweiter Nachrichten während einer Dauer des Übertragungsmodus ausgebildet. Durch die Übertragung mehrerer erster und/oder zweiter Nachrichten während der Dauer des Übertragungsmodus ist die Übertragung effizienter, als wenn mehrere Übertragungsmodi zum Einsatz kämen.

In einer weiteren Ausgestaltung weist das System mindestens ein weiteres Steuergerät auf. Dabei ist das mindestens eine weitere Steuergerät wie das Steuergerät ausgebildet und ist das Feldgerät zur Übertragung von Nachrichten sowohl mit dem Steuergerät als auch mit dem mindestens einen weiteren Steuergerät ausgebildet.

Die Aufgabe ist auch durch ein Verfahren zum Betreiben eines Systems der beschriebenen Art gemäß Anspruch 14 gelöst. Erfindungsgemäß wird bei dem Verfahren von der Feldgerät-Steuerungsvorrichtung die Master-Rolle und von der Steuergerät-Steuerungsvorrichtung die Slave-Rolle umgesetzt. In einer Ausgestaltung weist die Feldgerät-Steuerungsvorrichtung den zuvor beschriebenen Arbeitsmodus und Übertragungsmodus auf und weist das Verfahren die folgenden Verfahrensschritte auf:
- Die Feldgerät-Steuerungsvorrichtung wird von der Feldgerät-Steuerungsvorrichtung in den Übertragungsmodus versetzt.
- Dann wird von der Feldgerät-Steuerungsvorrichtung eine erste Nachricht mit einer Aufforderung zur Übermittlung einer Aufgabe erzeugt.
- Die erste Nachricht wird an die Steuergerät-Steuerungsvorrichtung übertragen.
- Dann wird von der Steuergerät-Steuerungsvorrichtung während des Übertragungsmodus als Erwiderung auf die erste Nachricht eine zweite Nachricht mit einer Aufgabe erzeugt. Die Aufgabe weist vorzugsweise eine Durchführung einer Messung, eine Übermittlung von Daten, ein Auslesen eines Parameters, ein Auslesen eines Status, ein Ändern eines Parameters oder eine Eingabe eines Passworts auf.
- Die zweite Nachricht wird an die Feldgerät-Steuerungsvorrichtung übertragen.
- Dann wird von der Feldgerät-Steuerungsvorrichtung bestimmt, ob eine Abarbeitung der Aufgabe im Übertragungsmodus keine Beeinträchtigung oder eine Beeinträchtigung des Übertragungsmodus bedeutet.
- Von der Feldgerät-Steuerungsvorrichtung wird nur dann, wenn die Aufgabe keine Beeinträchtigung des Übertragungsmodus bedeutet, die Aufgabe im Übertragungsmodus abgearbeitet und andernfalls im Arbeitsmodus abgearbeitet.

In einer Weiterbildung der vorstehenden Ausgestaltung ist vorgesehen, dass von der Feldgerät-Steuerungsvorrichtung und von der Steuergerät-Steuerungsvorrichtung mehrere erste Nachrichten und/oder zweite Nachrichten während einer Dauer des Übertragungsmodus erzeugt und übertragen werden.

In einer weiteren Ausgestaltung ist vorgesehen, dass das Verfahren auf einem System ausgeführt wird, das gemäß einer der zuvor beschriebenen Ausgestaltungen und Weiterbildungen ausgebildet ist.

Im Übrigen gelten die Ausführungen zum System entsprechend für das Verfahren und die Ausführungen zum Verfahren entsprechend für das System.

Ein alternatives System weist ebenfalls ein Feldgerät und ein Steuergerät auf. Das Feldgerät weist eine Feldgerät-Steuerungsvorrichtung und eine Feldgerät-Übertragungsvorrichtung und das Steuergerät weist eine Steuergerät-Steuerungsvorrichtung und eine Steuergerät-Übertragungsvorrichtung auf. Die Feldgerät-Steuerungsvorrichtung und die Feldgerät-Übertragungsvorrichtung weisen eine physikalische Kommunikationsverbindung auf und die Feldgerät-Steuerungsvorrichtung ist ausgebildet, die Feldgerät-Übertragungsvorrichtung über die Kommunikationsverbindung zu steuern und Informationen und Status zur Feldgerät-Übertragungsvorrichtung zu übertragen. Das Steuergerät ist zum Beispiel ein Internet-of-Things-Gateway oder ein Smartphone. Die Feldgerät-Steuerungsvorrichtung und die Steuergerät-Steuerungsvorrichtung sind zu einer unidirektionalen Übertragung von Nachrichten gemäß einem Kommunikationsprotokoll von der Feldgerät-Übertragungsvorrichtung zur Steuergerät-Übertragungsvorrichtung ausgebildet. Die Ausbildung zur unidirektionalen Übertragung ist insbesondere dadurch umgesetzt, dass Nachrichten als Broadcasts übertragen werden. Vorzugsweise ist die Übertragung eine Funkübertragung. Ein Kommunikationsprotokoll ist zum Beispiel ein Bluetooth-Protokoll. Durch die unidirektionale Übertragung ist es nicht möglich, Nachrichten von der Steuergerät-Steuerungsvorrichtung zur Feldgerät-Steuerungsvorrichtung zu übertragen, wodurch die Sicherheit verbessert ist. Die Feldgerät-Steuerungsvorrichtung ist ausgebildet, geeignete Übertragungsintervalle für die Übertragung von Nachrichten zu bestimmen und die Feldgerät-Übertragungsvorrichtung entsprechend zu steuern. Wenn das Feldgerät zum Beispiel eine Messvorrichtung aufweist, dann liegt ein geeignetes Übertragungsintervall außerhalb eines Messintervalls, in welchem eine Messung durchgeführt wird. Auf diese Weise wird verhindert, dass sich eine Übertragung und eine Messung beeinträchtigen. Vorzugsweise ist die Feldgerät-Steuerungsvorrichtung zur Steuerung der Messvorrichtung ausgebildet. Vorzugsweise sind die Feldgerät-Steuerungsvorrichtung und die Messvorrichtung zur Kommunikation über eine Stromschnittstelle ausgebildet. Eine Beeinträchtigung kann sich zum Beispiel dadurch ergeben, dass die Übertragung und die Messung zusammen genommen mehr Energie benötigen, als dem Feldgerät zur Verfügung steht. Wenn die Messvorrichtung zum Beispiel die Messung mittels einer Funkmessung, zum Beispiel einer Radarmessung, durchführt, dann kann eine Beeinträchtigung zwischen der Funkmessung und der Funkübertragung auftreten. Eine Nachricht enthält zum Beispiel einen Status und/oder einen Messwert. Das alternative System kann auch mehrere Feldgeräte der beschriebenen Art aufweisen, die ausgebildet sind, mit dem Steuergerät in der beschriebenen Art zu kommunizieren.

Im Einzelnen ist eine Vielzahl von Möglichkeiten gegeben, das System und auch das Verfahren zum Betreiben eines Systems auszugestalten und weiterzubilden. Dazu wird verwiesen sowohl auf die den unabhängigen Ansprüchen nachgeordneten Ansprüche als auch die nachfolgende Beschreibung eines bevorzugten Ausführungsbeispiels in Verbindung mit der Zeichnung. Die Zeichnung zeigt
- Fig. 1: ein Ausführungsbeispiel eines Systems und
- Fig. 2: einen Ausschnitt aus einem Ablaufplan eines Ausführungsbeispiel eines Verfahrens.

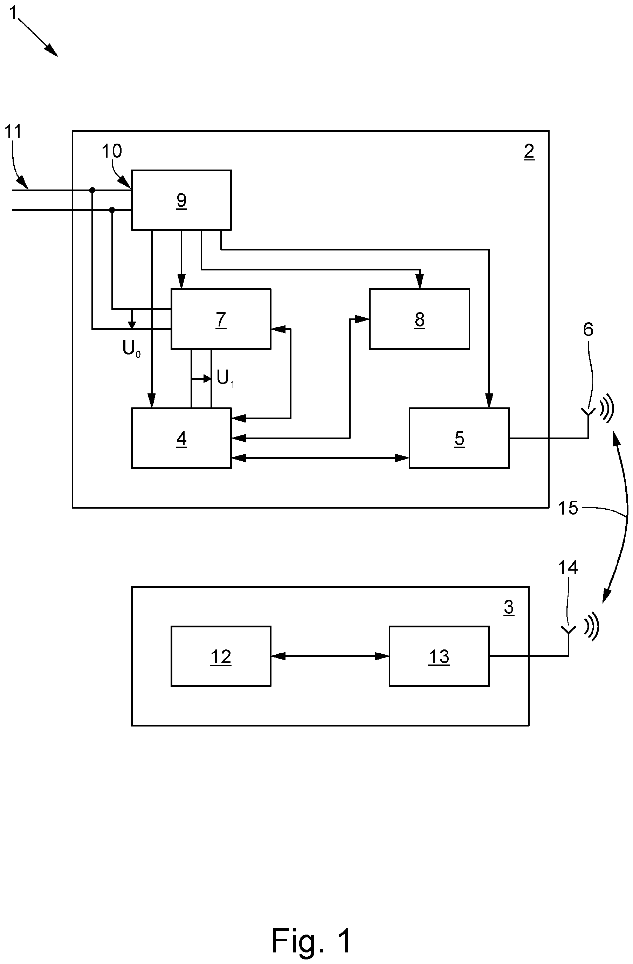

Fig. 1 zeigt ein System 1 mit einem Feldgerät 2 und einem Steuergerät 3.

Das Feldgerät 2 weist eine Feldgerät-Steuerungsvorrichtung 4, eine Feldgerät-Übertragungsvorrichtung 5 mit einer Feldgerät-Antenne 6, eine Überwachungsvorrichtung 7, eine Messvorrichtung 8 und eine Versorgungsvorrichtung 9 mit einer Stromschnittstelle 10 auf. Die Stromschnittstelle 10 ist mit einer Stromschleife 11 verbunden. Die Feldgerät-Steuerungsvorrichtung 4 ist zur Steuerung der Überwachungsvorrichtung 7, der Messvorrichtung 8 und der Feldgerät-Übertragungsvorrichtung 5 ausgebildet. Im Betrieb des Systems 1 werden bei der Steuerung Informationen in beide Richtungen übertragen, was mit den Doppelpfeilen angedeutet ist.

Das Steuergerät 3 weist eine Steuergerät-Steuerungsvorrichtung 12 und eine Steuergerät-Übertragungsvorrichtung 13 mit einer Steuergerät-Antenne 14 auf.

Die Feldgerät-Übertragungsvorrichtung 5 und die Steuergerät-Übertragungsvorrichtung 13 weisen eine Übertragungsstrecke 15 zwischeneinander auf. Die Übertragungsstrecke 15 ist eine Funkübertragungsstrecke, und zwar eine Bluetooth-Funkübertragungsstrecke. Dementsprechend sind die Feldgerät-Antenne 6 und die Steuergerät-Antenne 14 für Bluetooth-Frequenzen ausgebildet. Weiter sind die Feldgerät-Steuerungsvorrichtung 4 und die Steuergerät-Steuerungsvorrichtung 12 zu einer bidirektionalen Übertragung von Nachrichten zwischeneinander gemäß einem Kommunikationsprotokoll über die Feldgerät-Übertragungsvorrichtung 5, die Übertragungsstrecke 15 und die Steuergerät-Übertragungsvorrichtung 13 ausgebildet. Eine Nachricht weist eine beliebige Information auf.

Das Kommunikationsprotokoll setzt die Übertragung von Nachrichten dabei mit einer Master-Rolle und einer Slave-Rolle um. In diesem Ausführungsbeispiel setzt die Feldgerät-Steuerungsvorrichtung 4 die Master-Rolle und die Steuergerät-Steuerungsvorrichtung 12 die Slave-Rolle um. Demnach kann nur die Feldgerät-Steuerungsvorrichtung 4 unaufgefordert eine Nachricht an die Steuergerät-Steuerungsvorrichtung 12 übertragen, wohingegen die Steuergerät-Steuerungsvorrichtung 12 nur dann eine Nachricht an die Feldgerät-Steuerungsvorrichtung 4 übertragen kann, wenn sie dazu von der Feldgerät-Steuerungsvorrichtung 4 mit einem entsprechenden Inhalt einer Nachricht aufgefordert worden ist. Die Steuergerät-Steuerungsvorrichtung 12 kann unaufgefordert keine Nachrichten übertragen.

Die Umsetzung der Master-Rolle durch die Feldgerät-Steuerungsvorrichtung 4 und der Slave-Rolle durch die Steuergerät-Steuerungsvorrichtung 12 bewirkt insbesondere, dass das Feldgerät 2 dann eine Nachricht oder eine Anzahl an Nachrichten an das Steuergerät 3 überträgt, wenn die Ressourcen des Feldgeräts 2 für die Dauer eines Arbeitsmodus ausreichend sind, also Ressourcen für die Abarbeitung von Aufgaben zur Verfügung stehen. Weiter sind die Zeitpunkte, an welchen das Feldgerät 2 eine Nachricht an das Steuergerät 3 überträgt, dem Feldgerät 2 bekannt. Andere hier nicht eingezeichnete Geräte können unaufgefordert keine Nachrichten an das Feldgerät 2 übertragen. Das ist gerade bei der Funkübertragungsstrecke 15 wichtig.

Das Feldgerät 2 ist zur Versorgung mit elektrischer Energie aus der Stromschleife 11 ausgebildet. Elektrische Energie wird durch die Versorgungseinrichtung 9 der Stromschleife 11 entnommen und mit dieser elektrischen Energie werden die Versorgungseinrichtung 9, die Überwachungsvorrichtung 7, die Messvorrichtung 8, die Feldgerät-Steuerungsvorrichtung 4 und die Feldgerät-Übertragungsvorrichtung 5 versorgt. Die Versorgung ist durch Pfeile angedeutet. Zwar ist die über die Stromschleife 11 übertragbare Leistung gering, jedoch bestimmt das Feldgerät 2, da es die Master-Rolle umsetzt, die Zeitpunkte von Übertragungen von Nachrichten und des Abarbeitens von Aufgaben, sodass das Feldgerät 2 eine Leistungsaufnahme über die von der Stromschleife 11 zur Verfügung stellbare Leistung hinaus vermeidet.

Die Überwachungsvorrichtung 7 ist zur Bestimmung einer zur Verfügung stehenden Energie und zur Übermittlung der zur Verfügung stehenden Energie an die Feldgerät-Steuerungsvorrichtung 4 ausgebildet. Mit der Übermittlung der zur Verfügung stehenden Energie ist eine Information und nicht die Übertragung der Energie selbst gemeint. Die Feldgerät-Steuerungsvorrichtung 4 ist ausgebildet, eine Übertragung von Nachrichten zur Steuergerät-Steuerungsvorrichtung 12 nur dann durchzuführen, wenn die zur Verfügung stehende Energie größer als eine vorgegebene Minimalenergie ist. Die Minimalenergie ist der Feldgerät-Steuerungsvorrichtung 4 vorliegend vorgegeben. Auf diese Weise ist sichergestellt, dass keine Unterversorgung des Feldgeräts 2 mit elektrischer Energie bei der Übertragung einer Nachricht auftritt, welche eine Funktion des Feldgeräts 2 beeinträchtigt.

In diesem Ausführungsbeispiel weist das Feldgerät 2, und zwar die Feldgerät-Steuerungsvorrichtung 4, einen in den Figuren nicht separat eingezeichneten Kondensator mit einer Kapazität auf. Die Überwachungsvorrichtung 7 ist zur Bestimmung der zur Verfügung stehenden Energie ausgebildet, indem die Überwachungsvorrichtung 7 zur Bestimmung zum einen einer im Kondensator gespeicherten Energie aus einer Kondensatorspannung U₁ und der Kapazität und zum anderen zur Bestimmung eines Energieverbrauchs des Feldgeräts 2 ausgebildet ist. Hier ist die Überwachungsvorrichtung 7 auch zur Messung einer Eingangsspannung U₀ und zur Bestimmung einer Ladegeschwindigkeit des Kondensators aus der Eingangsspannung U₀ zur genaueren Bestimmung der zur Verfügung stehenden Energie ausgebildet. Die Eingangsspannung U₀ liegt über der Stromschleife 11 an.

Der Feldgerät-Übertragungsvorrichtung 5 ist eine Übertragungsleistung zur Übertragung von Nachrichten zur Steuergerät-Übertragungsvorrichtung 13 vorgebbar. Eine Übertragung einer Nachricht von der Feldgerät-Steuerungsvorrichtung 4 über die Übertragungsstrecke 15 zur Steuergerät-Übertragungsvorrichtung 13 durch die Feldgerät-Übertragungsvorrichtung 5 erfolgt somit mit der vorgegebenen Übertragungsleistung.

Die Feldgerät-Steuerungsvorrichtung 4 ist zur Bestimmung der Übertragungsleistung ausgehend von der zuvor bestimmten zur Verfügung stehenden Leistung und zur Vorgabe der Übertragungsleistung der Feldgerätübertragungsvorrichtung 5 ausgebildet. Folglich ist die Übertragungsleistung jeweils an die zur Verfügung stehende Leistung angepasst.

Die Feldgerät-Steuerungsvorrichtung 4 ist zur Durchführung einer Messung mit der Messvorrichtung 8 ausgebildet. Die Messvorrichtung ist zur Messung einer Temperatur, eines Drucks und eines Füllstands eines Mediums in einem Behälter ausgebildet. Weder das Medium noch der Behälter sind hier eingezeichnet.

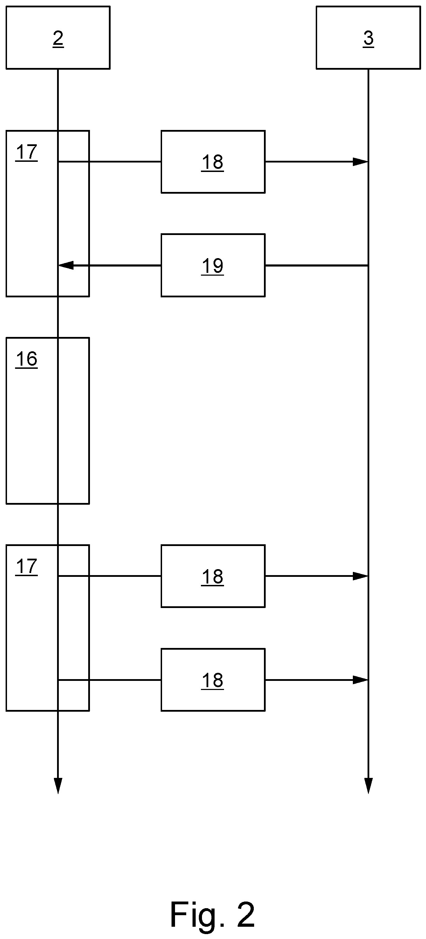

Die Feldgerät-Steuerungsvorrichtung 4 weist einen Arbeitsmodus 16 und einen Übertragungsmodus 17 auf, siehe auch Fig. 2. Der Arbeitsmodus 16 und der Übertragungsmodus 17 sind zeitlich voneinander getrennt. Das bedeutet, dass im Betrieb des Systems 1 die Feldgerät-Steuerungsvorrichtung 4 entweder im Arbeitsmodus 16 oder im Übertragungsmodus 17 ist. Nur der Übertragungsmodus 17 ist zum Übertragen von Nachrichten ausgebildet. Die Feldgerät-Steuerungsvorrichtung 4 ist ausgebildet, im Arbeitsmodus 16 andere Arbeiten als das Übertragen von Nachrichten auszuführen. Zu diesen Arbeiten zählen z. B. Funktionen des Feldgeräts 2. Zu diesen Funktionen zählt z. B. das Durchführen von Messungen mit der Messvorrichtung 8. Die Feldgerät-Steuerungsvorrichtung 4 ist auch zum Wechseln zwischen dem Arbeitsmodus 16 und dem Übertragungsmodus 17 ausgebildet. Die Feldgerät-Steuerungsvorrichtung 4 kann somit im Betrieb des Feldgeräts 2 selbstständig bestimmen, ob sie im Arbeitsmodus 16 oder im Übertragungsmodus 17 arbeitet. In diesem Ausführungsbeispiel alterniert die Feldgerät-Steuerungsvorrichtung 4 zwischen dem Arbeitsmodus 16 und dem Übertragungsmodus 17. Die Feldgerät-Steuerungsvorrichtung 4 ist zur Durchführung einer Messung mit der Messvorrichtung 8 im Arbeitsmodus 16 und zur Übertragung von die Messung betreffenden Nachrichten im Übertragungsmodus 17 ausgebildet. Eine Dauer des Arbeitsmodus 16 und des Übertragungsmodus 17 beträgt 100 Millisekunden.

Die Feldgerät-Steuerungsvorrichtung 4 und die Steuergerät-Steuerungsvorrichtung 12 sind weiter wie folgt ausgebildet:
- Die Feldgerät-Steuerungsvorrichtung 4 ist zur Erzeugung einer ersten Nachricht im Übertragungsmodus 17 ausgebildet, wobei die erste Nachricht 18 eine Aufforderung zur Übermittlung einer Aufgabe aufweist.
- Die Steuergerät-Steuerungsvorrichtung 12 ist zur Erzeugung einer zweiten Nachricht 19 mit einer Aufgabe als Erwiderung auf die erste Nachricht 18 während des Übertragungsmodus 17 ausgebildet.
- Die Feldgerät-Steuerungsvorrichtung 4 ist ausgebildet, zu bestimmen, ob eine Abarbeitung der Aufgabe Übertragungsmodus 17 keine Beeinträchtigung oder eine Beeinträchtigung des Übertragungsmodus 17 bedeutet.
- Weiter ist die Feldgerät-Steuerungsvorrichtung 4 ausgebildet, die Aufgabe nur dann im Übertragungsmodus 17 abzuarbeiten, wenn sie keine Beeinträchtigung des Übertragungsmodus 17 bedeutet und andernfalls im Arbeitsmodus 16.

Im Betrieb des Systems 1 erfolgen die Erzeugung und die Übertragung der ersten Nachricht 18 und der zweiten Nachricht 19 während die Feldgerät-Steuerungsvorrichtung 4 im Übertragungsmodus 17 ist. Wenn die Aufgabe keine Beeinträchtigung des Betriebs des Feldgeräts 2 bedeutet, dann wird die Aufgabe im an den Übertragungsmodus 17 unmittelbar anschließenden Arbeitsmodus 16 abgearbeitet.

Die Feldgerät-Steuerungsvorrichtung 4 und die Steuergerät-Steuerungsvorrichtung 12 sind zur Erzeugung und Übertragung mehrerer erster Nachrichten 18 und zweiter Nachrichten 19 während einer Dauer des Übertragungsmodus 17 ausgebildet.

Fig. 2 zeigt einen Ausschnitt eines Ablaufplans eines Ausführungsbeispiels eines Verfahrens zum Betreiben des zuvor beschriebenen Systems 1. Das Verfahren weist die folgenden Verfahrensschritte auf:
- Die Feldgerät-Steuerungsvorrichtung 4 wird von der Feldgerät-Steuerungsvorrichtung 4 in den Übertragungsmodus 17 versetzt.
- Dann wird von der Feldgerät-Steuerungsvorrichtung 4 eine erste Nachricht 18 mit einer Aufforderung zur Übermittlung einer Aufgabe erzeugt.
- Die erste Nachricht wird zur Steuergerät-Steuerungsvorrichtung 12 übertragen.
- Dann wird von der Steuergerät-Steuerungsvorrichtung 12 während des Übertragungsmodus 17 als Erwiderung auf die erste Nachricht 18 eine zweite Nachricht 19 mit einer Aufgabe erzeugt. Die Aufgabe weist eine Durchführung einer Messung mit der Messvorrichtung 8 und die anschließende Übertragung von Messergebnissen auf.
- Die zweite Nachricht 19 wird zur die Feldgerät-Steuerungsvorrichtung 4 übertragen.
- Dann wird von der Feldgerät-Steuerungsvorrichtung 4 bestimmt, ob eine Abarbeitung der Aufgabe im Übertragungsmodus 17 keine Beeinträchtigung oder eine Beeinträchtigung des Übertragungsmodusn 17 bedeutet.
- Von der Feldgerät-Steuerungsvorrichtung 4 wird nur dann, wenn die Aufgabe eine Beeinträchtigung des Übertragungsmodus 17 bedeutet, die Aufgabe im folgenden Arbeitsmodus 16 abgearbeitet. Da die Abarbeitung der Aufgabe vorliegend eine Beeinträchtigung des Übertragungsmodus 17 bedeutet, wird im folgenden Arbeitsmodus 16 von der Feldgerät-Steuerungsvorrichtung 4 mit der Messvorrichtung 8 eine Messung durchgeführt und werden die Messergebnisse der Messung im folgenden Übertragungsmodus 17 mit zwei weiteren ersten Nachrichten 18 an die Steuergerät-Steuerungsvorrichtung 12 übertragen.

### Bezugszeichen

- 1: System
- 2: Feldgerät
- 3: Steuergerät
- 4: Feldgerät-Steuerungsvorrichtung
- 5: Feldgerät-Übertragungsvorrichtung
- 6: Feldgerät-Antenne
- 7: Überwachungsvorrichtung
- 8: Messvorrichtung
- 9: Versorgungsvorrichtung
- 10: Stromschnittstelle
- 11: Stromschleife
- 12: Steuergerät-Steuerungsvorrichtung
- 13: Steuergerät-Übertragungsvorrichtung
- 14: Steuergerät-Antenne
- 15: Übertragungsstrecke
- 16: Arbeitsmodus
- 17: Übertragungsmodus
- 18: Erste Nachricht
- 19: Zweite Nachricht

## Patentansprüche

1. System (1) mit einem Feldgerät (2) und einem Steuergerät (3),
wobei das Feldgerät (2) eine Feldgerät-Steuerungsvorrichtung (4) und eine Feldgerät-Übertragungsvorrichtung (5) aufweist,
wobei das Steuergerät (3) eine Steuergerät-Steuerungsvorrichtung (12) und eine Steuergerät-Übertragungsvorrichtung (13) aufweist,
wobei die Feldgerät-Übertragungsvorrichtung (5) und die Steuergerät-Übertragungsvorrichtung (13) eine Übertragungsstrecke (15) zwischeneinander aufweisen,
wobei die Feldgerät-Steuerungsvorrichtung (4) und die Steuergerät-Steuerungsvorrichtung (12) zu einer bidirektionalen Übertragung von Nachrichten zwischeneinander gemäß einem Kommunikationsprotokoll über die Feldgerät-Übertragungsvorrichtung (5), die Übertragungsstrecke (15) und die Steuergerät-Übertragungsvorrichtung (13) ausgebildet sind und
wobei das Kommunikationsprotokoll die Übertragung von Nachrichten mit einer Master-Rolle und einer Slave-Rolle umsetzt,
**dadurch gekennzeichnet,**
**dass** die Feldgerät-Steuerungsvorrichtung (4) die Master-Rolle und die Steuergerät-Steuerungsvorrichtung (12) die Slave-Rolle umsetzt.

2. System (1) nach Anspruch 1, **dadurch gekennzeichnet, dass** die Übertragungsstrecke (15) eine Funkübertragungsstrecke ist, vorzugsweise eine Bluetooth-Funkübertragungsstrecke.

3. System (1) nach Anspruch 1 oder 2, **dadurch gekennzeichnet, dass** das Feldgerät (2) zur Versorgung mit elektrischer Energie über eine Stromschleife (11) ausgebildet ist.

4. System (1) nach einem der Ansprüche 1 bis 3, **dadurch gekennzeichnet, dass** das Feldgerät (2) eine Überwachungsvorrichtung (7) aufweist, dass die Überwachungsvorrichtung (7) zur Bestimmung einer zur Verfügung stehenden Energie und zur Übermittlung der zur Verfügung stehenden Energie an die Feldgerät-Steuerungsvorrichtung (4) ausgebildet ist, dass die Feldgerät-Steuerungsvorrichtung (4) ausgebildet ist, eine Übertragung von Nachrichten zur Steuergerät-Steuerungsvorrichtung (12) nur dann durchzuführen, wenn die zur Verfügung stehende Energie größer als eine vorgegebene Minimalenergie ist.

5. System (1) nach Anspruch 4, **dadurch gekennzeichnet, dass** das Feldgerät (2) einen Kondensator mit einer Kapazität aufweist, dass die Überwachungsvorrichtung (7) zur Bestimmung der zur Verfügung stehenden Energie ausgebildet ist, indem die Überwachungsvorrichtung (7) zur Bestimmung einer im Kondensator gespeicherten Energie aus einer Kondensatorspannung (U₁) und der Kapazität und zur Bestimmung eines Energieverbrauchs des Feldgeräts (2) ausgebildet ist, und dass vorzugsweise die Überwachungsvorrichtung (7) zur Messung einer Eingangsspannung (U₀) und zur Bestimmung einer Ladegeschwindigkeit des Kondensators aus der Eingangsspannung (U₀) zur genaueren Bestimmung der zur Verfügung stehenden Energie ausgebildet ist.

6. System (1) nach Anspruch 4 oder 5, **dadurch gekennzeichnet, dass** der Feldgerät-Übertragungsvorrichtung (5) eine Übertragungsleistung zur Übertragung von Nachrichten zur Steuergerät-Übertragungsvorrichtung (13) vorgebbar ist, dass die Feldgerät-Steuerungsvorrichtung (4) zur Bestimmung der Übertragungsleistung ausgehend von der zur Verfügung stehenden Energie und zur Vorgabe der Übertragungsleistung der Feldgerät-Übertragungsvorrichtung (5) ausgebildet ist.

7. System (1) nach einem der Ansprüche 1 bis 6, **dadurch gekennzeichnet, dass** das Feldgerät (2) eine Messvorrichtung (8) aufweist, dass die Feldgerät-Steuerungsvorrichtung (4) zur Durchführung einer Messung mit der Messvorrichtung (8) ausgebildet ist und dass vorzugsweise die Messvorrichtung (8) zur Messung einer Temperatur und/oder eines Drucks und/oder eines Füllstands und/oder eines Durchflusses ausgebildet ist.

8. System (1) nach einem der Ansprüche 1 bis 7, **dadurch gekennzeichnet, dass** die Feldgerät-Steuerungsvorrichtung (4) einen Arbeitsmodus (16) und einen Übertragungsmodus (17) aufweist, dass der Arbeitsmodus (16) und der Übertragungsmodus (17) zeitlich getrennt sind, dass nur der Übertragungsmodus (17) zum Übertragen von Nachrichten ausgebildet ist, dass die Feldgerät-Steuerungsvorrichtung (4) zum Wechseln zwischen dem Arbeitsmodus (16) und dem Übertragungsmodus (17) ausgebildet ist und dass vorzugsweise im Betrieb des Systems (1) die Feldgerät-Steuerungsvorrichtung (4) zwischen dem Arbeitsmodus (16) und dem Übertragungsmodus (17) alterniert.

9. System (1) nach Anspruch 7 und 8, **dadurch gekennzeichnet, dass** die Feldgerät-Steuerungsvorrichtung (4) zur Durchführung der Messung im Arbeitsmodus (16) und zur Übertragung von die Messung betreffenden Nachrichten im Übertragungsmodus (17) ausgebildet ist.

10. System (1) nach Anspruch 8 oder 9, **dadurch gekennzeichnet, dass** eine Dauer des Arbeitsmodus (16) und/oder des Übertragungsmodus (17) begrenzt ist, vorzugsweise auf 100 ms.

11. System (1) nach einem der Ansprüche 8 bis 10, **dadurch gekennzeichnet,**
- **dass** die Feldgerät-Steuerungsvorrichtung (4) zur Erzeugung einer ersten Nachricht (18) im Übertragungsmodus (17) ausgebildet ist und dass die erste Nachricht (18) eine Aufforderung zur Übermittlung einer Aufgabe aufweist,
- **dass** die Steuergerät-Steuerungsvorrichtung (12) zur Erzeugung einer zweiten Nachricht (19) mit einer Aufgabe als Erwiderung auf die erste Nachricht (18) während des Übertragungsmodus (17) ausgebildet ist und dass die Aufgabe vorzugsweise eine Durchführung einer Messung, eine Übermittlung von Daten, ein Auslesen eines Parameters, ein Auslesen eines Status, ein Ändern eines Parameters oder eine Eingabe eines Passworts aufweist,
- **dass** die Feldgerät-Steuerungsvorrichtung (4) ausgebildet ist, zu bestimmen, ob eine Abarbeitung der Aufgabe im Übertragungsmodus (17) keine Beeinträchtigung oder eine Beeinträchtigung des Übertragungsmodus (17) bedeutet und
- **dass** die Feldgerät-Steuerungsvorrichtung (4) ausgebildet ist, die Aufgabe nur dann im Übertragungsmodus (17) abzuarbeiten, wenn sie keine Beeinträchtigung des Betriebs des Feldgeräts (2) bedeutet.

12. System (1) nach Anspruch 11, **dadurch gekennzeichnet, dass** die Feldgerät-Steuerungsvorrichtung (4) und die Steuergerät-Steuerungsvorrichtung (12) zur Erzeugung und Übertragung mehrerer erster Nachrichten (18) und/oder zweiter Nachrichten (19) während einer Dauer des Übertragungsmodus (17) ausgebildet sind.

13. System (1) nach einem der Ansprüche 1 bis 12, **dadurch gekennzeichnet, dass** das System (1) mindestens ein weiteres Steuergerät (3) aufweist, dass das mindestens eine weitere Steuergerät (3) wie das Steuergerät (3) ausgebildet ist und dass das Feldgerät (2) zur Übertragung von Nachrichten sowohl mit dem Steuergerät (3) als auch mit dem mindestens einen weiteren Steuergerät (3) ausgebildet ist.

14. Verfahren zum Betreiben eines Systems (1) mit einem Feldgerät (2) und einem Steuergerät (3),
wobei das Feldgerät (2) eine Feldgerät-Steuerungsvorrichtung (4) und eine Feldgerät-Übertragungsvorrichtung (5) aufweist,
wobei das Steuergerät (3) eine Steuergerät-Steuerungsvorrichtung (12) und eine Steuergerät-Übertragungsvorrichtung (13) aufweist,
wobei die Feldgerät-Übertragungsvorrichtung (5) und die Steuergerät-Übertragungsvorrichtung (13) eine Übertragungsstrecke (15) zwischeneinander aufweisen,
wobei die Feldgerät-Steuerungsvorrichtung (4) und die Steuergerät-Steuerungsvorrichtung (12) zu einer bidirektionalen Übertragung von Nachrichten zwischeneinander gemäß einem Kommunikationsprotokoll über die Feldgerät-Übertragungsvorrichtung (5), die Übertragungsstrecke (15) und die Steuergerät-Übertragungsvorrichtung (12) ausgebildet sind und
wobei das Kommunikationsprotokoll die Übertragung von Nachrichten mit einer Master-Rolle und einer Slave-Rolle umsetzt,
**dadurch gekennzeichnet,**
**dass** von der Feldgerät-Steuerungsvorrichtung (4) die Master-Rolle und von der Steuergerät-Steuerungsvorrichtung (13) die Slave-Rolle umgesetzt wird.

15. Verfahren nach Anspruch 14, wobei das System nach Anspruch 8 ausgebildet ist, **dadurch gekennzeichnet,**
- **dass** die Feldgerät-Steuerungsvorrichtung (4) von der Feldgerät-Steuerungsvorrichtung (4) in den Übertragungsmodus (17) versetzt wird,
- **dass** dann von der Feldgerät-Steuerungsvorrichtung (4) eine erste Nachricht (18) mit einer Aufforderung zur Übermittlung einer Aufgabe erzeugt wird,
- **dass** die erste Nachricht (18) an die Steuergerät-Steuerungsvorrichtung (12) übertragen wird,
- **dass** dann von der Steuergerät-Steuerungsvorrichtung (12) während des Übertragungsmodus (17) als Erwiderung auf die erste Nachricht (18) eine zweite Nachricht (19) mit einer Aufgabe erzeugt wird und dass die Aufgabe vorzugsweise eine Durchführung einer Messung, eine Übermittlung von Daten, ein Auslesen eines Parameters, ein Auslesen eines Status, ein Ändern eines Parameters oder eine Eingabe eines Passworts aufweist,
- **dass** die zweite Nachricht (19) an die Feldgerät-Steuerungsvorrichtung (4) übertragen wird,
- **dass** dann von der Feldgerät-Steuerungsvorrichtung (4) bestimmt wird, ob eine Abarbeitung der Aufgabe im Übertragungsmodus (17) keine Beeinträchtigung oder eine Beeinträchtigung des Übertragungsmodus (17) bedeutet,
- **dass** von der Feldgerät-Steuerungsvorrichtung (4) nur dann, wenn die Aufgabe keine Beeinträchtigung des Übertragungsmodus (17) bedeutet, die Aufgabe im Übertragungsmodus (17) abgearbeitet wird und andernfalls im Arbeitsmodus (16) abgearbeitet wird.

16. Verfahren nach Anspruch 15, **dadurch gekennzeichnet, dass** von der Feldgerät-Steuerungsvorrichtung (4) und von der Steuergerät-Steuerungsvorrichtung (12) mehrere erste Nachrichten (18) und/oder zweite Nachrichten (19) während einer Dauer des Übertragungsmodus (17) erzeugt und übertragen werden.

17. Verfahren nach Anspruch 15 oder 16, wobei das System (1) nach einem der Ansprüche 2 bis 11 ausgebildet ist.

18. System (1) mit einem Feldgerät (2) und einem Steuergerät (3),
wobei das Feldgerät (2) eine Feldgerät-Steuerungsvorrichtung (4) und eine Feldgerät-Übertragungsvorrichtung (5) aufweist,
wobei das Steuergerät (3) eine Steuergerät-Steuerungsvorrichtung (12) und eine Steuergerät-Übertragungsvorrichtung (13) aufweist,
wobei die Feldgerät-Steuerungsvorrichtung (4) und die Feldgerät-Übertragungsvorrichtung (5) eine physikalische Kommunikationsverbindung aufweisen,
wobei die Feldgerät-Steuerungsvorrichtung (4) ausgebildet ist, die Feldgerät-Übertragungsvorrichtung (5) über die Kommunikationsverbindung zu steuern und Informationen und Status zur Feldgerät-Übertragungsvorrichtung (5) zu übertragen,
**dadurch gekennzeichnet,**
**dass** die Feldgerät-Steuerungsvorrichtung (4) und die Steuergerät-Steuerungsvorrichtung (12) zu einer unidirektionalen Übertragung von Nachrichten gemäß einem Kommunikationsprotokoll von der Feldgerät-Übertragungsvorrichtung (5) zur Steuergerät-Übertragungsvorrichtung (13) ausgebildet sind.

19. System (1) nach Anspruch 18, **dadurch gekennzeichnet, dass** das Steuergerät (3) ein Internet-of Things-Gateway oder ein Smartphone ist.

20. System (1) nach Anspruch 18 oder 19, **dadurch gekennzeichnet, dass** die Ausbildung zur unidirektionalen Übertragung dadurch umgesetzt ist, dass Nachrichten als Broadcasts übertragen werden.

21. System (1) nach einem der Ansprüche 18 bis 20, **dadurch gekennzeichnet, dass** die Übertragung eine Funkübertragung ist.

22. System (1) nach einem der Ansprüche 18 bis 21, **dadurch gekennzeichnet, dass** das Kommunikationsprotokoll ein Bluetooth-Protokoll ist.

23. System (1) nach einem der Ansprüche 18 bis 22, **dadurch gekennzeichnet, dass** die Feldgerät-Steuerungsvorrichtung (4) ist ausgebildet, geeignete Übertragungsintervalle für die Übertragung von Nachrichten zu bestimmen und die Feldgerät-Übertragungsvorrichtung (5) entsprechend zu steuern.

24. System (1) nach einem der Ansprüche 18 bis 23, **dadurch gekennzeichnet, dass** das Feldgerät (2) eine Messvorrichtung (8) aufweist, dass die Feldgerät-Steuerungsvorrichtung (4) zur Durchführung einer Messung mit der Messvorrichtung (8) ausgebildet ist und dass vorzugsweise die Messvorrichtung (8) zur Messung einer Temperatur und/oder eines Drucks und/oder eines Füllstands und/oder eines Durchflusses ausgebildet ist.

25. System (1) nach einem der Ansprüche 18 bis 24, **dadurch gekennzeichnet, dass** die Feldgerät-Steuerungsvorrichtung (4) und die Messvorrichtung (8) zur Kommunikation über eine Stromschnittstelle (10) ausgebildet sind.

26. System (1) nach einem der Ansprüche 18 bis 25, **dadurch gekennzeichnet, dass** eine Nachricht einen Status und/oder einen Messwert enthält.

27. System (1) nach einem der Ansprüche 18 bis 26, **dadurch gekennzeichnet, dass** das System (1) mehrere Feldgeräte (2) aufweist, die ausgebildet sind, mit dem Steuergerät (3) in der beschriebenen Art zu kommunizieren.

## Claims

1. System (1) comprising a field device (2) and a control device (3),
wherein the field device (2) comprises a field device controller (4) and a field device transmitter (5),
wherein the control device (3) comprises a control device controller (12) and a control device transmitter (13),
wherein the field device transmitter (5) and the control device transmitter (13) have a transmission path (15) between them,
wherein the field device controller (4) and the control device controller (12) are adapted for bidirectional transmission of messages between one another according to a communication protocol via the field device transmitter (5), the transmission path (15) and the control device transmitter (13), and
wherein the communication protocol implements the transmission of messages with a master role and a slave role,
**characterized in**
**that** the field device controller (4) implements the master role and the control device controller (12) implements the slave role.

2. System (1) according to claim 1, **characterized in that** the transmission path (15) is a radio transmission path, preferably a Bluetooth radio transmission path.

3. System (1) according to claim 1 or 2, **characterized in that** the field device (2) is designed to be supplied with electrical energy via a current loop (11).

4. System (1) according to any one of claims 1 to 3, **characterized in that** the field device (2) has a monitoring device (7), that the monitoring device (7) is designed for determining an available energy and for transmitting the available energy to the field device controller (4), that the field device controller (4) is designed to carry out transmission of messages to the control device controller (12) only if the available energy is greater than a predetermined minimum energy.

5. System (1) according to claim 4, **characterized in that** the field device (2) comprises a capacitor having a capacitance, that the monitoring device (7) is designed to determine the available energy **in that** the monitoring device (7) is designed to determine an energy stored in the capacitor from a capacitor voltage (U₁) and the capacitance and to determine an energy consumption of the field device (2) and that preferably the monitoring device (7) is designed to measure an input voltage (U₀) and to determine a charging rate of the capacitor from the input voltage (U₀) in order to determine the available energy more precisely.

6. System (1) according to claim 4 or 5, **characterized in that** a transmission power for transmitting messages to the control device transmitter (13) can be preset for the field device transmitter (5), that the field device controller (4) is designed to determine the transmission power on the basis of the available energy and to preset the transmission power of the field device transmitter (5).

7. System (1) according to any one of claims 1 to 6, **characterized in that** the field device (2) has a measuring device (8), that the field device controller (4) is designed to carry out a measurement with the measuring device (8), and that, preferably, the measuring device (8) is designed to measure a temperature and/or a pressure and/or a filling level and/or a flow rate.

8. System (1) according to any one of claims 1 to 7, **characterized in that** the field device controller (4) has a working mode (16) and a transmission mode (17), that the working mode (16) and the transmission mode (17) are separated in time, that only the transmission mode (17) is designed to transmit messages, that the field device controller (4) is designed to alternate between the working mode (16) and the transmission mode (17), and that, preferably during operation of the system (1), the field device controller (4) alternates between the working mode (16) and the transmission mode (17).

9. System (1) according to claim 7 and 8, **characterized in that** the field device controller (4) is designed to carry out the measurement in the working mode (16) and to transmit messages relating to the measurement in the transmission mode (17).

10. System (1) according to claim 8 or 9, **characterized in that** a duration of the working mode (16) and/or the transmission mode (17) is limited, preferably to 100 ms.

11. System (1) according to any one of claims 8 to 10, **characterized in,**
- **that** the field device controller (4) is designed to generate a first message (18) in the transmission mode (17) and that the first message (18) comprises a request to transmit a task,
- **that** the control device controller (12) is designed to generate a second message (19) with a task in response to the first message (18) during the transmission mode (17), and that the task preferably comprises carrying out a measurement, transmitting data, reading a parameter, reading a status, changing a parameter or entering a password,
- **that** the field device controller (4) is designed to determine whether or not a processing of the task in the transmission mode (17) means impairment of the transmission mode (17), and
- **that** the field device controller (4) is designed to process the task in the transmission mode (17) only if it means no impairment of the operation of the field device (2).

12. System (1) according to claim 11, **characterized in that** the field device controller (4) and the control device controller (12) are designed to generate and transmit a plurality of first messages (18) and/or second messages (19) during a duration of the transmission mode (17).

13. System (1) according to any one of claims 1 to 12, **characterized in that** the system (1) comprises at least one further control device (3), that the at least one further control device (3) is designed like the control device (3), and that the field device (2) is designed to transmit messages both with the control device (3) and with the at least one further control device (3).

14. Method for operating a system (1) with a field device (2) and a control device (3),
wherein the field device (2) comprises a field device controller (4) and a field device transmitter (5),
wherein the control device (3) comprises a control device controller (12) and a control device transmitter (13),
wherein the field device transmitter (5) and the control device transmitter (13) have a transmission path (15) between them,
wherein the field device controller (4) and the control device controller (12) are adapted for bidirectional transmission of messages between one another according to a communication protocol via the field device transmitter (5), the transmission path (15) and the control device transmitter (12), and
wherein the communication protocol implements the transmission of messages with a master role and a slave role,
**characterized in**
**that** the master role is implemented by the field device controller (4) and the slave role is implemented by the control device controller (13).

15. Method according to claim 14, wherein the system is designed according to claim 8, **characterized in**
- **that** the field device controller (4) is set in the transmission mode (17) by the field device controller (4),
- **that** a first message (18) is then generated by the field device controller (4) with a request to transmit a task,
- **that** the first message (18) is transmitted to the control device controller (12),
- **that** a second message (19) with a task is then generated by the control device controller (12) during the transmission mode (17) in response to the first message (18), and that the task preferably comprises carrying out a measurement, transmitting data, reading a parameter, reading a status, changing a parameter or entering a password,
- **that** the second message (19) is transmitted to the field device controller (4),
- **that** it is then determined by the field device controller (4) whether or not processing the task in the transmission mode (17) means impairment of the operation of the transmission mode (17),
- **that** the field device controller (4) processes the task in the transmission mode (17) only if the task means no impairment of the transmission mode (17) and otherwise processes the task in the working mode (16).

16. Method according to claim 15, **characterized in that** a plurality of first messages (18) and/or second messages (19) are generated and transmitted by the field device controller (4) and by the control device controller (12) during a duration of the transmission mode (17).

17. Method according to claim 15 or 16, wherein the system (1) is designed according to any one of claims 2 to 11.

18. System (1) comprising a field device (2) and a control device (3),
wherein the field device (2) comprises a field device controller (4) and a field device transmitter (5),
wherein the control device (3) comprises a control device controller (12) and a control device transmitter (13),
wherein the field device controller (4) and the field device transmitter (5) have a physical communication link,
wherein the field device controller (4) is designed to control the field device transmitter (5) via the communication link and to transmit information and status to the field device transmitter (5),
**characterized in**
**that** the field device controller (4) and the control device transmitter (12) are designed for unidirectional transmission of messages in accordance with a communication protocol from the field device transmitter (5) to the control device transmitter (13).

19. System (1) according to claim 18, **characterized in that** the control device (3) is an internet of things gateway or a smartphone.

20. System (1) according to claim 18 or 19, **characterized in that** the design for unidirectional transmission is implemented **in that** messages are transmitted as broadcasts.

21. System (1) according to any one of claims 18 to 20, **characterized in that** the transmission is a radio transmission.

22. System (1) according to any one of claims 18 to 21, **characterized in that** the communication protocol is a Bluetooth protocol.

23. System (1) according to any one of claims 18 to 22, **characterized in that** the field device controller (4) is designed to determine suitable transmission intervals for the transmission of messages and to control the field device transmitter (5) accordingly.

24. System (1) according to any one of claims 18 to 23, **characterized in that** the field device (2) has a measuring device (8), that the field device controller (4) is designed to carry out a measurement with the measuring device (8), and that preferably the measuring device (8) is designed to measure a temperature and/or a pressure and/or a fill level and/or a flow rate.

25. System (1) according to any one of claims 18 to 24, **characterized in that** the field device controller (4) and the measuring device (8) are designed for communication via a current interface (10).

26. System (1) according to any one of claims 18 to 25, **characterized in that** a message contains a status and/or a measured value.

27. System (1) according to any one of claims 18 to 26, **characterized in that** the system (1) has a plurality of field devices (2) which are designed to communicate with the control device (3) in the manner described.

## Revendications

1. Système (1) comprenant un appareil de terrain (2) et un appareil de commande (3),
l'appareil de terrain (2) comportant un dispositif de commande d'appareil de terrain (4) et un dispositif de transmission d'appareil de terrain (5),
l'appareil de commande (3) comportant un dispositif de commande d'appareil de commande (12) et un dispositif de transmission d'appareil de commande (13),
le dispositif de transmission d'appareil de terrain (5) et le dispositif de transmission d'appareil de commande (13) comportant une liaison de transmission (15) entre eux,
le dispositif de commande d'appareil de terrain (4) et le dispositif de commande d'appareil de commande (12) étant conçus pour une transmission bidirectionnelle de messages entre eux selon un protocole de communication par le biais du dispositif de transmission d'appareil de terrain (5), de la liaison de transmission (15) et du dispositif de transmission d'appareil de commande (13) et
le protocole de communication mettant en œuvre la transmission de messages avec un rôle maître et un rôle esclave,
**caractérisé en ce que**
le dispositif de commande d'appareil de terrain (4) met en œuvre le rôle de maître et le dispositif de commande d'appareil de commande (12) met en œuvre le rôle d'esclave.

2. Système (1) selon la revendication 1, **caractérisé en ce que** la liaison de transmission (15) est une liaison de transmission radio, de préférence une liaison de transmission radio Bluetooth.

3. Système (1) selon la revendication 1 ou 2, **caractérisé en ce que** l'appareil de terrain (2) est conçu pour fournir de l'énergie électrique par le biais d'une boucle de courant (11).

4. Système (1) selon l'une des revendications 1 à 3, **caractérisé en ce que** l'appareil de terrain (2) comporte un dispositif de surveillance (7), **en ce que** le dispositif de surveillance (7) est conçu pour déterminer l'énergie disponible et pour transmettre l'énergie disponible au dispositif de commande d'appareil de terrain (4), **en ce que** le dispositif de commande d'appareil de terrain (4) est conçu pour effectuer une transmission de messages au dispositif de commande d'appareil de commande (12) uniquement si l'énergie disponible est supérieure à une énergie minimale spécifiée.

5. Système (1) selon la revendication 4, **caractérisé en ce que** l'appareil de terrain (2) comporte un condensateur pourvu d'une capacité, **en ce que** le dispositif de surveillance (7) est conçu pour déterminer l'énergie disponible du fait que le dispositif de surveillance (7) est conçu pour déterminer une énergie stockée dans le condensateur à partir d'une tension de condensateur (U₁) et de la capacité et pour déterminer une consommation d'énergie de l'appareil de terrain (2) et **en ce que** de préférence le dispositif de surveillance (7) est conçu pour mesurer une tension d'entrée (U₀) et pour déterminer une vitesse de charge du condensateur à partir de la tension d'entrée (U₀) afin de déterminer plus précisément l'énergie disponible.

6. Système (1) selon la revendication 4 ou 5, **caractérisé en ce qu'**une puissance de transmission peut être spécifiée au dispositif de transmission d'appareil de terrain (5) afin de transmettre des messages au dispositif de transmission d'appareil de commande (13), **en ce que** le dispositif de commande d'appareil de terrain (4) est conçu pour déterminer la puissance de transmission à partir de l'énergie disponible et pour spécifier la puissance de transmission du dispositif de transmission d'appareil de terrain (5).

7. Système (1) selon l'une des revendications 1 à 6, **caractérisé en ce que** l'appareil de terrain (2) comporte un dispositif de mesure (8), **en ce que** le dispositif de commande d'appareil de terrain (4) est conçu pour effectuer une mesure avec le dispositif de mesure (8) et **en ce que** de préférence le dispositif de mesure (8) est conçu pour mesurer une température et/ou une pression et/ou un niveau de remplissage et/ou un débit.

8. Système (1) selon l'une des revendications 1 à 7, **caractérisé en ce que** le dispositif de commande d'appareil de terrain (4) présente un mode de travail (16) et un mode de transmission (17), **en ce que** le mode de travail (16) et le mode de transmission (17) sont séparés dans le temps, **en ce que** seul le mode de transmission (17) est conçu pour transmettre des messages, **en ce que** le dispositif de commande d'appareil de terrain (4) est conçu pour commuter entre le mode de travail (16) et le mode de transmission (17) et **en ce que** le dispositif de commande d'appareil de terrain (4) alterne entre le mode de travail (16) et le mode de transmission (17) de préférence pendant le fonctionnement du système (1).

9. Système (1) selon la revendication 7 et 8, **caractérisé en ce que** le dispositif de commande d'appareil de terrain (4) est conçu pour effectuer la mesure dans le mode de travail (16) et pour transmettre des messages relatifs à la mesure dans le mode de transmission (17).

10. Système (1) selon la revendication 8 ou 9, **caractérisé en ce qu'**une durée du mode de travail (16) et/ou du mode de transmission (17) est limitée, de préférence à 100 ms.

11. Système (1) selon l'une des revendications 8 à 10, **caractérisé en ce que**
- le dispositif de commande d'appareil de terrain (4) est conçu pour générer un premier message (18) dans le mode de transmission (17) et **en ce que** le premier message (18) comporte une requête pour transmettre une tâche,
- le dispositif de commande d'appareil de commande (12) est conçu pour générer un deuxième message (19) avec une tâche en réponse au premier message (18) pendant le mode de transmission (17) et la tâche consiste de préférence à effectuer une mesure, transmettre des données, lire un paramètre, lire un état, modifier un paramètre ou saisir un mot de passe,
- le dispositif de commande d'appareil de terrain (4) est conçu pour déterminer si le traitement de la tâche dans le mode de transmission (17) n'entraîne pas de perturbation ou entraîne une perturbation du mode de transmission (17) et
- le dispositif de commande d'appareil de terrain (4) est conçu pour traiter la tâche dans le mode de transmission (17) uniquement si cela n'entraîne pas de perturbation du fonctionnement de l'appareil de terrain (2) .

12. Système (1) selon la revendication 11, **caractérisé en ce que** le dispositif de commande d'appareil de terrain (4) et le dispositif de commande d'appareil de commande (12) sont conçus pour générer et transmettre plusieurs premiers messages (18) et/ou deuxièmes messages (19) pendant une durée du mode de transmission (17) .

13. Système (1) selon l'une des revendications 1 à 12, **caractérisé en ce que** le système (1) comporte au moins un autre appareil de commande (3), **en ce que** l'au moins un autre appareil de commande (3) est conçu comme l'appareil de commande (3) et **en ce que** l'appareil de terrain (2) est conçu pour transmettre des messages aussi bien à l'appareil de commande (3) qu'à au moins un autre appareil de commande (3).

14. Procédé de fonctionnement d'un système (1) comprenant un appareil de terrain (2) et un appareil de commande (3),
l'appareil de terrain (2) comportant un dispositif de commande d'appareil de terrain (4) et un dispositif de transmission d'appareil de terrain (5),
l'appareil de commande (3) comportant un dispositif de commande d'appareil de commande (12) et un dispositif de transmission d'appareil de commande (13),
le dispositif de transmission d'appareil de terrain (5) et le dispositif de transmission d'appareil de commande (13) comportant une liaison de transmission (15) entre eux,
le dispositif de commande d'appareil de terrain (4) et le dispositif de commande d'appareil de commande (12) étant conçus pour effectuer une transmission bidirectionnelle de messages entre eux selon un protocole de communication par le biais du dispositif de transmission d'appareil de terrain (5), de la liaison de transmission (15) et du dispositif de transmission d'appareil de commande (12), et
le protocole de communication mettant en œuvre la transmission de messages avec un rôle maître et un rôle esclave,
**caractérisé en ce que**
le rôle maître est mis en œuvre par le dispositif de commande d'appareil de terrain (4) et le rôle esclave est mis en œuvre par le dispositif de commande d'appareil de commande (13).

15. Procédé selon la revendication 14, le système étant conçu selon la revendication 8, **caractérisé en ce que**
- le dispositif de commande d'appareil de terrain (4) est mis dans le mode de transmission (17) par le dispositif de commande d'appareil de terrain (4),
- un premier message (18) est ensuite généré par le dispositif de commande d'appareil de terrain (4) avec une requête de transmission d'une tâche,
- le premier message (18) est transmis au dispositif de commande d'appareil de commande (12),
- un deuxième message (19) est alors généré avec une tâche par le dispositif de commande d'appareil de commande (12) pendant le mode de transmission (17) en réponse au premier message (18) et la tâche consiste de préférence à effectuer une mesure, transmettre des données, lire un paramètre, lire un état, modifier un paramètre ou saisir un mot de passe,
- le deuxième message (19) est transmis au dispositif de commande d'appareil de terrain (4),
- le dispositif de commande d'appareil de terrain (4) détermine alors si le traitement de la tâche dans le mode de transmission (17) n'entraîne pas de perturbation ou entraîne une perturbation du mode de transmission (17),
- le dispositif de commande d'appareil de terrain (4) traite la tâche dans le mode de transmission (17) uniquement si la tâche n'entraîne pas de perturbation du mode de transmission (17), sinon il la traite dans le mode de travail (16).

16. Procédé selon la revendication 15, **caractérisé en ce que** le dispositif de commande d'appareil de terrain (4) et le dispositif de commande d'appareil de commande (12) génèrent et transmettent plusieurs premiers messages (18) et/ou deuxièmes messages (19) pendant une durée du mode de transmission (17).

17. Procédé selon la revendication 15 ou 16, le système (1) étant conçu selon l'une des revendications 2 à 11.

18. Système (1) comprenant un appareil de terrain (2) et un appareil de commande (3),
l'appareil de terrain (2) comportant un dispositif de commande d'appareil de terrain (4) et un dispositif de transmission d'appareil de terrain (5),
le dispositif de commande (3) comportant un dispositif de commande d'appareil de commande (12) et un dispositif de transmission d'appareil de commande (13), le dispositif de commande d'appareil de terrain (4) et le dispositif de transmission d'appareil de terrain (5) comportant une liaison de communication physique,
le dispositif de commande d'appareil de terrain (4) étant conçu pour commander le dispositif de transmission d'appareil de terrain (5) par le biais de la liaison de communication et pour transmettre des informations et un état au dispositif de transmission d'appareil de terrain (5),
**caractérisé en ce que**
le dispositif de commande d'appareil de terrain (4) et le dispositif de commande d'appareil de commande (12) sont conçus pour effectuer une transmission unidirectionnelle de messages selon un protocole de communication du dispositif de transmission d'appareil de terrain (5) au dispositif de transmission d'appareil de commande (13).

19. Système (1) selon la revendication 18, **caractérisé en ce que** l'appareil de commande (3) est une passerelle Internet des Objets ou un Smartphone.

20. Système (1) selon la revendication 18 ou 19, **caractérisé en ce que** la configuration pour la transmission unidirectionnelle est mise en œuvre **en ce que** les messages sont transmis sous forme de diffusions.

21. Système (1) selon l'une des revendications 18 à 20, **caractérisé en ce que** la transmission est une transmission radio.

22. Système (1) selon l'une des revendications 18 à 21, **caractérisé en ce que** le protocole de communication est un protocole Bluetooth.

23. Système (1) selon l'une des revendications 18 à 22, **caractérisé en ce que** le dispositif de commande d'appareil de terrain (4) est conçu pour déterminer des intervalles de transmission appropriés pour la transmission de messages et pour commander en conséquence le dispositif de transmission d'appareil de terrain (5).

24. Système (1) selon l'une des revendications 18 à 23, **caractérisé en ce que** l'appareil de terrain (2) comporte un dispositif de mesure (8), **en ce que** le dispositif de commande d'appareil de terrain (4) est conçu pour effectuer une mesure avec le dispositif de mesure (8) et **en ce que** de préférence le dispositif de mesure (8) est conçu pour mesurer une température et/ou une pression et/ou un niveau de remplissage et/ou un débit.

25. Système (1) selon l'une des revendications 18 à 24, **caractérisé en ce que** le dispositif de commande d'appareil de terrain (4) et le dispositif de mesure (8) sont conçus pour communiquer par le biais d'une interface de puissance (10).

26. Système (1) selon l'une des revendications 18 à 25, **caractérisé en ce qu'**un message contient un état et/ou une valeur de mesure.

27. Système (1) selon l'une des revendications 18 à 26, **caractérisé en ce que** le système (1) comporte plusieurs appareils de terrain (2) qui sont conçus pour communiquer avec l'appareil de commande (3) de la manière décrite.
